# EUROPÄISCHE PATENTSCHRIFT

(11) **EP 2 563 645 B1**
(45) Veröffentlichungstag und Bekanntmachung des Hinweises auf die Patenterteilung: **05.08.2015**
(21) Anmeldenummer: 11709010.0
(22) Anmeldetag: 09.03.2011
(51) Int. Cl.: B62D 65/04, B62D 65/16

(54) **POSITIONIERUNGSVORRICHTUNG UND VERFAHREN ZUR HERSTELLUNG EINER BAUTEILANORDNUNG**
POSITIONING DEVICE AND METHOD FOR PRODUCING A COMPONENT ARRANGEMENT
DISPOSITIF DE POSITIONNEMENT ET PROCÉDÉ DE PRODUCTION D'UN ENSEMBLE DE PIÈCES

(30) Priorität: 28.04.2010 DE 102010028294
(43) Veröffentlichungstag der Anmeldung: 06.03.2013
(73) Patentinhaber: Bayerische Motoren Werke Aktiengesellschaft, 80809 München (DE)
(72) Erfinder: FLEISCHER, Walter, 80939 München (DE); FEDER, Richard, 85419 Mauern (DE); NITTEL, Conrad, 01445 Radelbeul (DE); SCHMIDT, Thomas, 85748 Garching (DE)
(86) Internationale Anmeldenummer: PCT/EP2011/001137
(87) Internationale Veröffentlichungsnummer: WO 2011/134571

(56) Entgegenhaltungen:
- DE-A1- 10 337 071
- FR-A1- 2 915 952
- FR-A1- 2 921 040
- US-A1- 2010 052 365

## Beschreibung

Die vorliegende Erfindung betrifft eine Positionierungsvorrichtung zur Ausrichtung eines Trägerteils in Relation zu einem Referenzteil in einer vorbestimmten Position sowie ein Verfahren zur Herstellung einer Bauteilanordnung.

Bei der Entwicklung und Produktion heutiger Fahrzeuge ist die Reduktion des Gesamtfahrzeuggewichts ein wesentliches Ziel, da gewichtsarme Fahrzeuge nicht nur geringe Verbrauchswerte, sondern auch einen reduzierten Schadstoffausstoß aufweisen. Um dieses Ziel zu erreichen, wird eine Vielzahl unterschiedlicher Materialien verwendet. Im Bereich der Außenhaut, d.h. der Karosserie der Fahrzeuge, werden deshalb besonders bevorzugt Materialien aus Kunststoff verwendet. Da dies für die gesamte Karosserie jedoch nicht uneingeschränkt möglich ist, werden beispielsweise Stoßstangen aus Kunststoff und Kotflügel sowie Motorhauben oder Heckklappen weiterhin aus Blech hergestellt. Aufgrund der unterschiedlichen thermischen Ausdehnungskoeffizienten dieser Materialien müssen an den Stoßstellen, an denen zwei Bauteile unterschiedlicher Materialen aufeinander treffen, Ausgleichsbereiche in Form von Fugen bereitgestellt werden. Der Fugenverlauf bzw. die Gleichmäßigkeit des Fugenspaltes über ihre gesamte Fugenlänge ist ein maßgebliches Kriterium für den Qualitätseindruck eines Fahrzeuges.

Bei bislang aus dem Stand der Technik bekannten Montageverfahren werden zwei Teile aneinander ausgerichtet, indem man Lehren oder Schablonen an einem der Bauteile anordnet, die Bauteile zueinander ausrichtet und anschließend die Schablonen wieder entfernt, um sie für nachfolgende Bauteilpaarungen wieder verwenden zu können.

Die gattungsgemäße FR 2 915 952 A1 zeigt eine Baugruppe (10), die Teile einer Fahrzeugkarosserie (12) aufweist, welche eine Montageoberfläche (26) umfassen und einen Stoßfänger (16), der einen transversalen Träger (36) und einen Stoßabsorber (38) aufweist, der oberhalb des Trägers (36) montiert ist. Die Baugruppe (10) umfasst eine Stoßfängerabdeckung, welche den Träger (36) und den Absorber (38) abdeckt.

Aus der US 2010/0052365 A1 ist eine Vorrichtung zur Positionierung eines Außenhautbauteils eines Fahrzeugs neben einer Tür des Fahrzeugs, wobei die Tür eine geschlossene und eine geöffnete Position einnehmen kann, bekannt.

Das Anbringen und Entfernen der Lehren bzw. der Schablonen stellt einen zusätzlichen Prozessschritt dar und führt dadurch zur Verlangsamung des Montageprozesses und zur Erhöhung der Komplexität des Montageverfahrens.

Aufgabe der vorliegenden Erfindung ist es, eine Positionierungsvorrichtung anzugeben sowie ein Verfahren zur Herstellung einer Bauteilanordnung bereitzustellen, bei dem die oben beschriebenen Nachteile bekannter Verfahren vermieden werden.

Diese Aufgabe wird durch die Merkmale der unabhängigen Patentansprüche gelöst. Vorteilhafte Ausgestaltungen und Weiterbildungen der Erfindung sind in den Unteransprüchen angegeben.

Eine erfindungsgemäße Positionierungsvorrichtung, zur Ausrichtung eines Trägerteils in Relation zu einem Referenzteil in einer vorbestimmten Position, kann einen Kontaktbereich, mit dem die Positionierungsvorrichtung mit dem Referenzteil in Verbindung bringbar ist, aufweisen. Weiterhin kann die Positionierungsvorrichtung dadurch gekennzeichnet sein, dass mit der Positionierungsvorrichtung Kräfte aufnehmbar sind, die von dem Grundbereich auf den Kontaktbereich und umgekehrt wirken, wenn das Trägerteil und das Referenzteil die vorbestimmte Position einnehmen. Dadurch kann auf besonders einfache Weise sichergestellt werden, dass die Positionierungsvorrichtung eine ausreichende Steifigkeit hat, aufgrund derer das Trägerteil und das Referenzteil einen vorbestimmten Abstand voneinander einhalten, sofern die Kräfte, die diese Teile aufeinander zu bewegen würden, einen maximal zulässigen Materialbelastungswert nicht übersteigen.

Darüber hinaus weist der Kontaktbereich einen ersten Endabschnitt auf, der über mindestens ein Stegelement mit einem Grundbereich in Verbindung steht, wobei der Grundbereich, zum Abstützen der Positionierungsvorrichtung auf dem Trägerteil vorgesehen ist.

Weiterhin weist der Kontaktbereich einen zweiten Endabschnitt auf, der über ein Gelenk mit einem Grundbereich in Verbindung steht. Hieraus ergibt sich der Vorteil, dass auf die Positionierungsvorrichtung wirkende Kräfte über den Kontaktbereich durch die Stegelemente in den Grundbereich einleitbar sind.

Weiterhin kann das Gelenk ein Scharniergelenk, insbesondere ein Filmscharniergelenk sein. Dies bietet den Vorteil, dass selbst wenn die Stegelemente durchbrochen oder zerstört sind, so dass sie keine Kräfte übertragen können, der Kontaktbereich über das Scharniergelenk mit dem Grundbereich in Verbindung steht und somit nicht unkontrolliert abfallen kann.

Weiterhin kann die Vorrichtung dadurch gekennzeichnet sein, dass der Grundbereich, integral an dem Trägerteil ausgebildet ist.

In einem weiteren Aspekt betrifft die Erfindung ein Verfahren zur Herstellung einer Bauteilanordnung, welche die Schritte: Ausrichtung eines Trägerteils in einer vorbestimmten Position an einem Referenzteil, und Fixieren des Trägerteils in der vorbestimmten Position, aufweisen kann. Ferner kann das Verfahren dadurch gekennzeichnet sein, dass das Trägerteil die vorbestimmte Position erreicht, wenn es mit einer Positionierungsvorrichtung in Verbindung steht und die Positionierungsvorrichtung gleichzeitig mit dem Referenzteil in Verbindung steht.

Weiterhin weist das Verfahren den Schritt auf: Durchtrennung eines Stegelements der Positionierungsvorrichtung.

Ferner kann das Verfahren den Schritt aufweisen: Anbringen eines Abdeckteils auf dem Trägerteil, wobei die Positionierungsvorrichtung in einem zusammengeklappten Zustand überführt wird. Das erfindungsgemäße Verfahren bietet den Vorteil, dass auf besonders einfache Weise das Trägerteil zu dem Referenzteil positioniert werden kann, ohne dass eine Lehre an den beiden Teilen angebracht und später wieder entnommen werden muss. Dadurch kann die Anzahl der Prozessschritte im Montageverfahren reduziert werden. Folglich wird damit gleichzeitig auch das Abdeckteil an dem Referenzteil ausgerichtet

In einem weiteren Aspekt betrifft die Erfindung ein Trägerteil mit zumindest einer Positionierungsvorrichtung, wobei der Grundbereich der Positionierungsvorrichtung integral mit dem Trägerteil ausgebildet sein kann.

Nachfolgend soll die Erfindung anhand von Ausführungsbeispielen näher erläutert werden, unter Bezugnahme auf die Figuren, die dabei beispielhaft, schematisch und nicht einschränkend zeigen:
- Figur 1: eine perspektivische Ansicht eines Kraftfahrzeugs mit daran zu montierender Heckstoßstange,
- Figur 2: eine perspektivische Darstellung eines erfindungsgemäßen Positionierungsvorrichtung, gemäß einer ersten Ausführungsform der Erfindung,
- Figur 3: eine Detailansicht einer Positionierungsvorrichtung in eingebauten Position, und
- Figur 4: eine perspektivische Darstellung einer Positionierungsvorrichtung gemäß einer weiteren Ausführungsform der Erfindung.

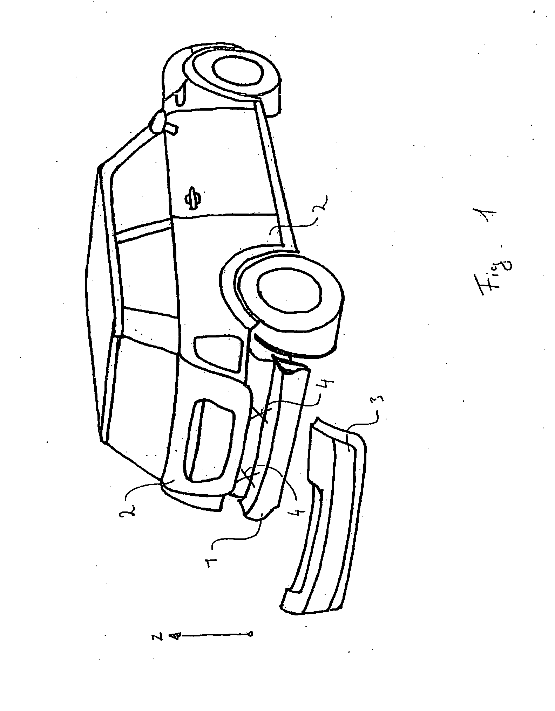

Beispielhaft und nicht einschränkend soll im Folgenden die Erfindung anhand einer Heckstoßstange und einer Heckklappe eines Fahrzeuges erläutert werden, das in Figur 1 abgebildet ist. Die Erfindung kann auch bei der Montage bzw. Ausrichtung der Lage von Frontstoßstangen oder bei der Ausrichtung von Kotflügeln an einer Motorhaube Anwendung finden. Um ein optisch ansprechendes, d.h. qualitativ hochwertiges Fugenbild bzw. Fugenspaltmaß zwischen einer Heckklappe 2 und einer Stoßfängeraußenhaut 3 zu erzeugen, muss die Stoßfängerführung 1 zur Heckklappe 2 individuell zu jedem Fahrzeug eingestellt werden. An die Stoßfängerführung 1 wird die Stoßfängeraußenhaut 3 montiert, folglich ist die Stoßfängerführung 1 positionsgebend für die Stoßfängeraußenhaut 3 in Bezug auf deren Ausrichtung gegenüber der Heckklappe 2. Mit anderen Worten, durch exakte Ausrichtung der Stoßfängerführung 1 bei deren Montage gegenüber der Heckklappe 2, kann die Position der Stoßfängeraußenhaut 3 bestimmt werden. Dadurch kann der Verlauf der Fuge zwischen Stoßfängeraußenhaut und Heckklappe durch Positionierung der Stoßfängerführung 1 bestimmt werden.

In den folgenden erfindungsgemäßen Beispielen entspricht die Stoßfängerführung 1 dem Trägerteil, die Heckklappe 2 dem Referenzteil und die Stoßfängeraußenhaut 3 dem Abdeckteil. Diese Begriffe sollen im Folgenden synonymhaft verwendet werden. Die Stoßfängeraussenhaut 3 entspricht dabei der Stoßstange und somit dem von Außen sichtbaren Teil des Fahrzeugs im Bereich der Stoßstangenanordnung.

Um bei der Montage, gemäß dem Möntageprozess des Stands der Technik, die korrekte Lage der Stoßfängerführung 1 prozesssicher zu erreichen, wird das gewünschte Maß zwischen der Stoßfängerführung 1 und der Heckklappe 2 mittels Sonderbetriebsmitteln, wie beispielsweise Lehren oder Schablonen 4, eingestellt. Wie oben erwähnt, werden nach dem Montageprozess die Lehren 4 wieder entfernt und für die Montage folgender Fahrzeuge verwendet.

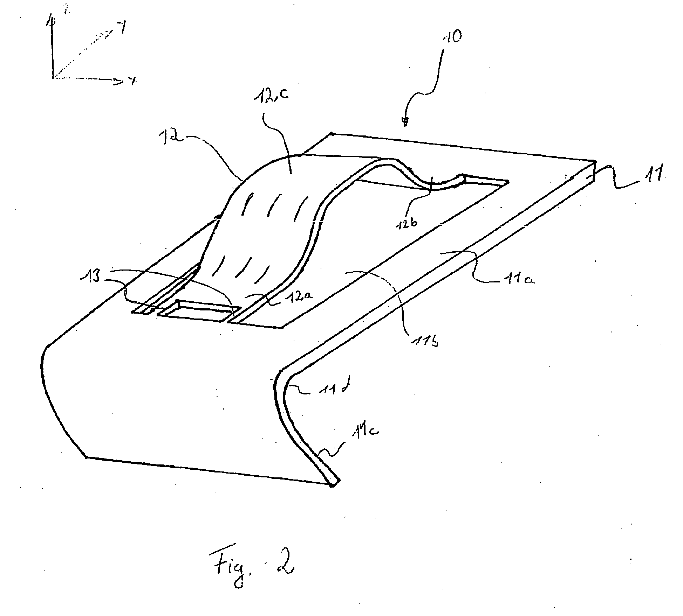

Erfindungsgemäß sind, anstatt der in Fig. 1 gezeigten Lehren 4, Positionierungsvorrichtungen 10 an dem Trägerteil 1 vorgesehen. Ein erstes Ausführungsbeispiel einer Positionierungsvorrichtung 10 wird im Folgenden mit Bezug zur Figur 2 näher erläutert. Die Positionierungsvorrichtung 10 umfasst zumindest einen Grundbereich 11, der einen Auflageabschnitt 11 a aufweist, mit einer flächigen, rahmenartigen äußeren Gestalt. In dem Auflageabschnitt 11a ist eine innere Ausnehmung 11 b vorgesehen. In Figur 2 weist diese Ausnehmung 11 b beispielhaft und nicht einschränkend eine im Wesentlichen rechteckige Form auf. Alternativ hierzu kann die Ausnehmung jedoch auch quadratische, runde oder ovale Ausschnittsformen aufweisen. Mit dem Auflageabschnitt 11a kommt die Positionierungsvorrichtung 10 auf dem Trägerteil 1 zur Auflage. Der Auflageabschnitt 11 a geht über einen gekrümmten Abschnitt 11 d in einen Klemmabschnitt 11 c über. Durch diese äußere geometrische Form des Grundbereichs 11 ist die Positionierungsvorrichtung 10 an die äußere Gestalt des Trägerteils 1 angepasst und kann so besonders gut daran geklemmt werden. Durch die Klemmwirkung hält die Positionierungsvorrichtung 10 an dem Trägerteil 1 besonders gut fest, so dass ein Verrutschen und damit eine Fehlstellung des Trägerteils 1 verhindert wird.

Die Ausnehmung 11 b wird von einem bandartigen, bogenförmigen Kontaktbereich 12 überspannt. Der Kontaktbereich 12 weist einen ersten Endabschnitt 12a und einen zweiten Endabschnitt 12b auf. Der erste Endabschnitt 12a ist über zwei Stegelemente 13 mit dem Grundbereich 11 der Positionierungsvorrichtung 10 verbunden. Der zweite Endabschnitt 12b ist über ein Filmscharniergelenk mit dem Grundbereich 11 verbunden. In einer alternativen, nicht gezeigten Ausführungsform der vorliegenden Erfindung, kann das Filmscharniergelenk auch als Drehscharniergelenk ausgebildet sein. Der Kontaktbereich 12 überspannt die Ausnehmung 11 b, wobei seine Endabschnitte 12a und 12b jeweils an gegenüberliegenden Enden der Ausnehmung 11 b mit dem Grundbereich 11 verbunden sind. Der Kontaktbereich 12 bildet einen mittleren Abschnitt 12c aus, der geeignet und dafür vorgesehen ist, mit dem Referenzteil 2 in Berührung zu kommen.

Abweichend von der in Figur 2 dargestellten Ausführungsform, kann in weiteren, nicht dargestellten Ausführungsformen, der Kontaktbereich wahlweise in der Profilform halbkreisförmig, rechteckig oder dreieckig zulaufend ausgebildet sein.

Unter Bezugnahme auf die Figuren 1 bis 3 soll im Folgenden das erfindungsgemäße Verfahren näher erläutert werden. Das Trägerteil 1 wird an vorbestimmten Stellen mit Positionierungsvorrichtungen 10 bestückt, wobei die Positionierungsvorrichtungen 10 mit ihren Auflageabschnitten 11a des Grundbereichs 11 auf dem Trägerteil 1 zur Auflage kommen. Solche vorbestimmte Stellen können beispielsweise den Positionen entsprechen an denen in Figur 1 die Lehren 4 angeordnet sind. Anschließend wird die so erzeugte Baugruppe an ihre Position am Fahrzeug geführt, bis die Positionierungsvorrichtungen 10 in Kontakt treten mit dem Referenzteil 2. In diesem Zustand wird das Trägerteil 1 an einer Grundstruktur befestigt. Im vorliegenden Beispiel eines Fahrzeugs ist die Grundstruktur als der Teil der Karosserie zu verstehen, der selbstständig tragend ist bzw. das Teil, an dem sowohl das Trägerteil 1 wie auch das Referenzteil 2 befestigt sind. An dieser Grundstruktur ist das Referenzteil 2, d.h. die Heckklappe, bereits vormontiert. Die Fixierung des Trägerteils 1 an der Grundstruktur erfolgt mit bekannten Verbindungsmethoden, wie beispielsweise Schrauben, Nieten, Schweißen und/oder Kleben.

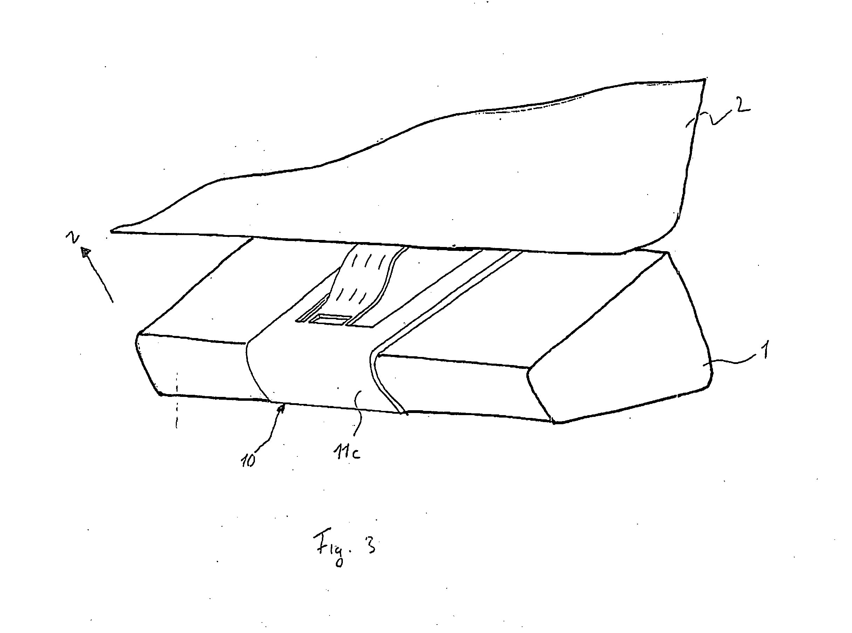

Wie in Figur 3 gezeigt, wird das Trägerteil 1 in Hochrichtung mit einer vorbestimmten, maximalen Kraft an das Referenzteil 2 gepresst, bis es seine vorbestimmte Position, d.h. seine Soll-Position erreicht hat. Dabei ist es wichtig, dass die Positionierungsvorrichtungen 10 diese Kraft übertragen können, ohne sich dabei zu verformen. Mit anderen Worten, in Hochrichtung, d.h. in Z-Richtung, wie in Figur 1, 2 und 3 durch den Pfeil Z dargestellt, weist die Positionierungsvorrichtung 10 eine derartige Steifigkeit auf, dass Kräfte unterhalb einer vorbestimmten, maximalen Kraft keine Verformung der Positionierungsvorrichtungen 10 zulassen. Dadurch kann sichergestellt werden, dass das Trägerteil 1 stets in seiner vorbestimmten Soll-Position verbleibt.

Die Positionierungsvorrichtungen 10 fungieren dabei als Abstandshalter zwischen dem Referenzteil 2 und dem Trägerteil 1. Nachdem das Trägerteil 1 an der Grundstruktur fixiert wird, muss abschließend die Stoßfängeraußenhaut 3, im Folgenden auch als Abdeckteil 3 bezeichnet, auf das Trägerteil 1 montiert werden. Um einen möglichst formschönen Übergang zu gewährleisten, bildet das Abdeckteil 3 einen Überhang aus, der zwischen dem Referenzteil 2 und dem Kontaktbereich 12 der Positionierungsvorrichtung 10 eingebracht werden muss. Um dies bewerkstelligen zu können, muss jedoch die kraftschlüssige Verbindung zwischen dem Referenzteil 2 und dem Kontaktbereich 12 aufgehoben werden. Hierfür wird das Stegelement 13 bzw. die Stegelemente 13 durchtrennt. Diese bilden somit eine Soll-Bruchstelle der Positionierungsvorrichtung 10. Nachdem die Soll-Bruchstelle durchtrennt ist, kann die Positionierungsvorrichtung 10 keine Kräfte mehr zwischen dem Kontaktbereich 12 und dem Grundbereich übertragen. Eine auf die Kontaktfläche 12c wirkende Kraft bewirkt eine Biegebewegung bzw. Drehbewegung des Kontaktbereiches 12 um das Gelenk 12b. Der Kontaktbereich 12 ist folglich nach dem Durchtrennen der Stege 13 als ein Laschenelement aufzufassen, das nachgiebig an dem Grundbereich 11 angeordnet ist.

Bei der Montage des Abdeckteils 3 wird durch einen Teilbereich des Abdeckteils 3, der mit dem Kontaktbereich 12 in Kontakt kommt, dieser Kontaktbereich 12 nach unten, d.h. entgegen der Hochrichtung Z gebogen, wobei der Teilbereich des Abdeckteils 3 darüber hinweg gleiten kann und so das Abdeckteil 3 in seine Endposition überführt wird. Wenn das Abdeckteil 3 seine vorbestimmte Endposition erreicht, wird es fixiert.

Ein weiteres, alternatives Verfahren der vorliegenden Erfindung, kann einen zusätzlichen Zwischenschritt aufweisen. Hierbei wird nach dem Durchtrennen der Stegelemente der verbleibende, laschenartige Kontaktbereich in eine vorbestimmte Position überführt, durch gezieltes Umbiegen bzw. Umklappen. In dieser vorbestimmten Position kann der laschenartige Kontaktbereich 12 gegenüber dem Grundbereich 11 verrastet und somit arretiert werden. Anschließend wird das Abdeckteil 3 auf das Trägerteil 1 aufgeschoben, ohne dass Kontaktbereiche 12 von an dem Trägerteil 1 angeordneten Positionierungsvorrichtungen 10 durch das Abdeckteil 3 berührt werden.

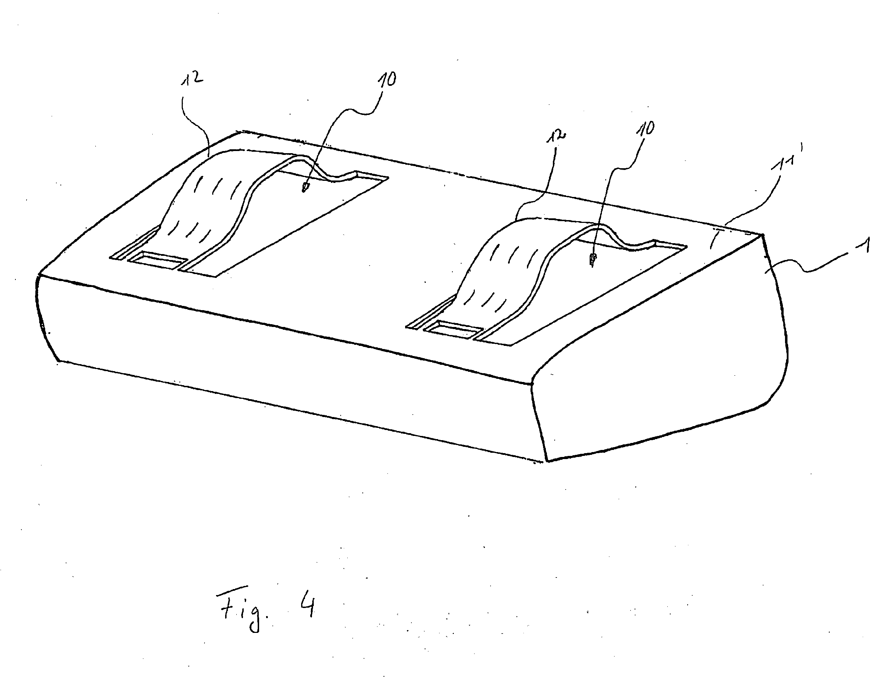

In einer weiteren, alternativen Ausführungsform der Erfindung kann die Positionierungsvorrichtung 10 integral, d.h. einstückig, mit dem Trägerteil 1 verbunden sein. Mit anderen Worten, in dieser Ausführungsform ist die Positionierungsvorrichtung 10 direkt an dem Trägerteil 1 ausgebildet. Dadurch kann der Verfahrensschritt eingespart werden, indem die Positionierungsvorrichtung 10 auf dem Trägerteil 1 angeordnet wird. Die übrigen Prozessschritte entsprechen denen des Verfahrens, dass mit Bezug zu Fig. 1-3 im Vorgehenden erläutert wurde. Somit kann der Montageprozess weiter verkürzt werden. Diese Ausführungsform ist in der Fig. 4 beispielhaft dargestellt. An dem Trägerteil 1 sind zwei Positionierungsvorrichtungen 10 ausgebildet, mit jeweils einem Kontaktbereich 12 und einem Grundbereich 11'. Der Grundbereich 11' ist dabei direkt an einer Oberfläche des Trägerteils 1 ausgebildet. Abweichend von der Darstellung in Fig. 4 kann auch nur eine Positionierungsvorrichtung 10 oder auch eine Vielzahl von mehr als zwei Positionierungsvorrichtungen 10 an dem Trägerteil 1 ausgebildet sein.

Der Aufbau, bzw. die Verbindung von Kontaktbereich 12 und Grundbereich 11 entspricht dem Aufbau, der bereits mit Bezug zur ersten Ausführungsform erläutert wurde. Das Verfahren zum Erzeugen einer Bauteilanordnung mit einer Positionierungsvorrichtung gemäß der zweiten Ausführungsform der vorliegenden Erfindung entspricht im Wesentlichen dem Verfahren, das mit Bezug zur ersten Ausführungsform erläutert wurde. Folglich sind die Merkmale der ersten Ausführungsform in sinnvoller Weise mit denen der zweiten Ausführungsform kombinierbar.

In den oben beschriebenen Verfahren klappt der laschenartige Kontaktbereich 12 vorteilhafterweise in die Ausnehmung 11 b des Grundbereichs 11 hinein.

In einem weiteren, nicht dargestellten Ausführungsbeispiel des erfindungsgemäßen Verfahrens, können die Stegelemente 13 beim Aufschieben des Abdeckteils 3 selbsttätig an einer hierfür vorgesehenen Soll-Bruchstelle durchtrennt werden. Die Stegelemente weisen eine im Wesentlichen stabförmige, sich länglich erstreckende äußere geometrische Form auf. Dabei erstrecken sich die Stegelemente 13 im Wesentlichen in ihrer Längsrichtung parallel zur Y-Achse des dargestellten Koordinatensystems. In dieser Richtung können die Stegelemente 13 höhere Kräfte aufnehmen als in einer Querrichtung dazu. Kräfte, die auf den Kontaktbereich 12c wirken, werden umgeleitet und in die Stegelemente 13 eingeleitet. Dabei werden Kräfte erzeugt, die in Längsrichtung der Stegelemente 13 wirken erzeugt. In X-Richtung und/oder Z-Richtung, mit anderen Worten, in einer Richtung, die sich im Wesentlichen senkrecht zur Längsrichtung der Stege erstreckt, können die Stegelemente 13 nur um ein Vielfaches niedrigere Kräfte übertragen als in Y-Richtung. Erfindungsgemäß ist folglich an dem Abdeckteil 3 ein Führungsteil vorgesehen, das bei der Montage des Abdeckteils 3, was einem Aufschieben über den Grundbereich 11 in Y-Richtung der Positionierungsvorrichtung entspricht, den Kontaktbereich 12 erfasst und in X-Richtung und/oder Z-Richtung wegdrückt. Dadurch wird eine Relativbewegung des ersten Abschnitts 12a in X-Richtung und/oder Z-Richtung gegenüber dem Grundbereich 11 erzeugt. Diese Relativbewegung in X-Richtung und/oder Z-Richtung ruft Kräfte in den Stegelementen 13 hervor, die die Materialfestigkeit der Stegelemente 13 in X-Richtung und/oder Z-Richtung übersteigt, so dass die Stegelemente 13 brechen. Durch weiteres Aufschieben des Abdeckteils 3 in Y-Richtung wird der so entstandene, laschenartige Kontaktbereich 12 in die Ausnehmung 11b gebogen. Dadurch können die Verfahrensschritte Montieren des Abdeckteils 3 und Durchtrennung der Stegelemente 13 überlagert werden. Folglich ergibt sich vorteilhafterweise eine weitere Reduktion der Zeitdauer für den Montageprozess.

## Patentansprüche

1. Positionierungsvorrichtung (10), zur Ausrichtung einer Stoßstangenführung (1) in Relation zu einer Heckklappe (2) in einer vorbestimmten Position, mit
- einem Kontaktbereich (12), mit dem die Positionierungsvorrichtung (10) mit der Heckklappe (2) in berührenden Kontakt bringbar ist, wobei
- mit der Positionierungsvorrichtung (10) Kräfte aufnehmbar sind, die von einem Grundbereich (11), der integral an der Stoßstangenführung (1) ausgebildet ist, auf den Kontaktbereich (12) wirken, wenn die Stoßstangenführung (1) und die Heckklappe (2) die vorbestimmte Position einnehmen **dadurch gekennzeichnet, dass** der Kontaktbereich (12)
- einen ersten Endabschnitt (12a) aufweist, der über mindestens ein Stegelement (13) mit dem Grundbereich (11), zum Abstützen der Positionierungsvorrichtung (10), in Verbindung steht und
- einen zweiten Endabschnitt (12b) aufweist, der über ein Gelenk mit dem Grundbereich (11) in Verbindung steht.

2. Vorrichtung nach Anspruch 1, **dadurch gekennzeichnet, dass** das Gelenk ein Scharniergelenk, insbesondere ein Filmscharniergelenk, ist.

3. Verfahren zur Herstellung einer Bauteilanordnung, mit den Schritten:
- Ausrichtung einer Stoßstangenführung (1) mit einer integral ausgebildeten Postionierungsvorrichtung (10) in einer vorbestimmten Position an einer Heckklappe (2),
- Fixieren der Stoßstangenführung (1) in der vorbestimmten Position, wobei
- die Stoßstangenführung (1) die vorbestimmte Position erreicht, wenn die Stoßstangenführung (1) über einen Kontaktbereich (12) der Positionierungsvorrichtung (10) mit der Heckklappe (2) durch berührenden Kontakt (2) in Verbindung steht, **gekennzeichnet durch** den Schritt:
- Durchtrennung eines Stegelements (13) der Positionierungsvorrichtung (10).

4. Verfahren nach Anspruch 3, **gekennzeichnet durch** den Schritt:
- Anbringen eines Abdeckteils (3) auf der Stoßstangenführung (1), wobei die Positionierungsvorrichtung (10) in einen zusammengeklappten Zustand überführt wird.

## Claims

1. A positioning device (10) for orienting a bumper guide (1) in relation to a tailgate (2) in a predetermined position, with
- a contact region (12), with which the positioning device (10) can be brought into touching contact with the tailgate (2), wherein
- forces can be absorbed by the positioning device (10), which forces act from a base region (11), which is integrally formed on the bumper guide (1), on the contact region (12) when the bumper guide (1) and the tailgate (2) adopt the predetermined position, **characterised in that**
the contact region (12)
- has a first end portion (12a), which is connected by at least one web element (13) to the base region (11), to support the positioning device (10), and
- has a second end portion (12b), which is connected by a joint to a base region (11).

2. A device according to claim 1, **characterised in that** the joint is a hinge joint, especially a film hinge joint.

3. A method for producing a component arrangement, having the steps:
- orienting a bumper guide (1) with an integrally formed positioning device (10) in a predetermined position on a tailgate (2),
- fixing the bumper guide (1) in the predetermined position, wherein
- the bumper guide (1) reaches the predetermined position when the bumper guide (1) is connected by a contact region (12) of the positioning device (10) to the tailgate (2) by touching contact (2), **characterised by** the step:
- severing a web element (13) of the positioning device (10).

4. A method according to claim 3, **characterised by** the step:
- attaching a covering part (3) to the bumper guide (1), wherein the positioning device (10) is transferred into a folded-up state.

## Revendications

1. Dispositif de positionnement (10) pour permettre d'aligner un élément de guidage de pare-choc (1) par rapport à un hayon (2) dans une position prédéfinie comprenant :
- une zone de contact (12) par laquelle le dispositif de positionnement (10) peut être mis en contact par attouchement avec le hayon (2),
- le dispositif de positionnement (10) pouvant absorber des contraintes qui agissent à partir d'une zone de base (11) réalisée intégralement sur le guidage de pare-choc (1) sur la zone de contact (12) lorsque le guidage de pare-choc (1) et le hayon (2) occupent la position prédéfinie,
**caractérisé en ce que** la zone de contact (12) comporte :
- un premier segment d'extrémité (12a) qui est en liaison avec la zone de base (11) par l'intermédiaire d'au moins un élément de barrette (13) pour supporter le dispositif de positionnement (10), et
- un second segment d'extrémité (12b) qui est relié à la zone de base (11) par l'intermédiaire d'une articulation.

2. Dispositif conforme à la revendication 1,
**caractérisé en ce que** l'articulation est une articulation de type charnière en particulier une articulation de type charnière à lame.

3. Procédé d'obtention d'un ensemble de pièces comprenant les étapes consistant à :
- aligner un guidage de pare-choc (1) avec un dispositif de positionnement (10) réalisé intégralement dans une position prédéfinie sur un hayon (2),
- fixer le guidage de pare-choc (1) dans la position prédéfinie,
procédé selon lequel le guidage de pare-choc (1) atteint la position prédéfinie lorsque le guidage de pare-choc (1) est relié par contact par attouchement avec le hayon (2) par l'intermédiaire d'une zone de contact (12) du dispositif de positionnement (10), **caractérisé par** une étape consistant à sectionner un élément de barrette (13) du dispositif de positionnement (10).

4. Procédé conforme à la revendication 3,
**caractérisé par** l'étape consistant à mettre en place un élément de recouvrement (3) sur le guidage de pare-brise (1), le dispositif de positionnement (10) étant transféré dans un état rabattu.
